# EUROPÄISCHE PATENTSCHRIFT

(11) **EP 1 342 027 B1**
(45) Veröffentlichungstag und Bekanntmachung des Hinweises auf die Patenterteilung: **08.11.2006**
(21) Anmeldenummer: 01984698.9
(22) Anmeldetag: 12.12.2001
(51) Int. Cl.: F16K 1/226

(54) **VERFAHREN ZUM ABDICHTEN EINES SPALTES ZWISCHEN EINER SCHWENKBAR IN EINEM DROSSELKLAPPENSTUTZEN GELAGERTEN DROSSELKLAPPE UND DROSSELKLAPPENSTUTZEN**
METHOD FOR SEALING A GAP BETWEEN A THROTTLE VALVE THAT IS PIVOTALLY MOUNTED IN A THROTTLE VALVE CONNECTION AND SAID CONNECTION
PROCEDE PERMETTANT D'ETANCHEIFIER UN ESPACE SITUE ENTRE UN PAPILLON DES GAZ MONTE PIVOTANT DANS UN CARTER ET LEDIT CARTER

(30) Priorität: 14.12.2000 DE 10062447; 15.05.2001 DE 10123490
(43) Veröffentlichungstag der Anmeldung: 10.09.2003
(73) Patentinhaber: SIEMENS AKTIENGESELLSCHAFT, 80333 München (DE)
(72) Erfinder: FLIEGNER, Jörg, 36217 Ronhausen (DE); KOHLEN, Peter, 61267 Neu-Anspach (DE)
(86) Internationale Anmeldenummer: PCT/DE2001/004667
(87) Internationale Veröffentlichungsnummer: WO 2002/048586

(56) Entgegenhaltungen:
- DE-A- 4 027 371
- DE-A- 19 703 296
- GB-A- 2 131 918
- US-A- 5 640 942
- US-A- 5 749 336
- PATENT ABSTRACTS OF JAPAN vol. 1996, no. 05, 31. Mai 1996 (1996-05-31) & JP 08 014069 A (NIPPONDENSO CO LTD), 16. Januar 1996 (1996-01-16)

## Beschreibung

Die Erfindung betrifft ein Verfahren zum Abdichten eines Spaltes zwischen einer schwenkbar in einem Drosselklappenstutzen gelagerten Drosselklappe und nach den Oberbegriffen der Ansprüche 1 und 2.

Drosselklappenstutzen der vorstehenden Art werden in heutigen Kraftfahrzeugen zur Regelung eines Verbrennungsluftstroms einer Brennkraftmaschine eingesetzt. Bei einem aus der Praxis bekannten Verfahren zur Abdichtung eines Spaltes zwischen der Drosselklappe und dem Gehäuse wird auf der zu der Brennkraftmaschine hin zu montierenden Seite der Drosselklappe ein Unterdruck erzeugt. Die Dichtmasse wird auf der anderen Seite der Drosselklappe in das Gehäuse hinein gesprüht. Hierdurch lässt sich eine Leckluft, die im eingebauten Zustand des Drosselklappenstutzens an der in Schließstellung befindlichen Drosselklappe vorbei strömt, auf ein Minimum reduzieren.

Die den nächstkommenden Stand der Technik darstellende DE-A-40 27 371 offenbart einen rohrförmigen Drosselklappenstutzen, bei dem eine Durchflussöffnung im Bereich einer Drosselklappe mit einer Schicht aus einem aushärtbaren Werkstoffgemisch versehen ist. Das Werkstoffgemisch haftet an der Wandung der Durchflussöffnung und dichtet die Drosselklappe ab. Nach dem Aushärten des Werkstoffgemischs wird die Drosselklappe gewaltsam in die Offenstellung bewegt.

Die DE-A-197 03 296 offenbart einen Drosselklappenstutzen, bei dem eine Welle der Drosselklappe über ein aushärtbares Dichtmittel abgedichtet wird.

Die GB-A-2 131 918 offenbart einen Drosselklappenstutzen, bei dem die Drosselklappe von einem flexiblen oder nachgiebigen Material abgedeckt ist.

Nachteilig bei den bekannten Verfahren ist, dass sie einen sehr großen Aufwand erfordern und dass der in Strömungsrichtung gesehen vor der Drosselklappe befindliche Bereich des Gehäuses und der Drosselklappe mit Dichtmasse überzogen wird. Daher gelangt nur ein geringer Teil der Dichtmasse zu dem abzudichtenden Spalt.

Der Erfindung liegt das Problem zugrunde, ein Verfahren der eingangs genannten Art so weiterzubilden, dass sich die Drosselklappe gegenüber dem Gehäuse besonders kostengünstig abdichten lässt. Weiterhin soll ein mit diesem Verfahren kostengünstig abgedichteter Drosselklappenstutzen geschaffen werden.

Diese Probleme werden durch die Gegenstände der Ansprüche 1 und 2 gelöst.

Durch diese Gestaltung werden Sprühnebel der Dichtmasse im Gehäuse und auf der Drosselklappe vermieden. Die Dichtmasse lässt sich beispielsweise mit einer Kanüle exakt an die vorgesehene Stelle bringen. Daher gelangt die gesamte Dichtmasse an die zu dichtende Stelle. Weiterhin lässt sich die Dichtmasse mittels einer Kanüle besonders exakt dosieren. Eine aufwändige Zerstäubung der Dichtmasse ist bei dem erfindungsgemäßen Verfahren nicht erforderlich.

Zur Unterstützung der Kapillarkräfte könnte wie bei dem bekannten Verfahren eine vorgesehene Druckdifferenz auf beiden Seiten der Drosselklappe eingestellt werden. Hierbei muss der Drosselklappenstutzen jedoch zur Erzeugung des Unterdrucks an die Brennkraftmaschine oder einer Absaugvorrichtung montiert werden. Da durch den Unterdruck die Drosselklappe zudem geringfügig verzogen wird, ist der Unterdruck bei dem Einsprühen der Dichtmasse in das Gehäuse sehr genau auf den Unterdruck beim Leerlauf der Brennkraftmaschine einzustellen. Das erfindungsgemäße Verfahren erfordert einen besonders geringen Aufwand, wenn vor dem Aufbringen der Dichtmasse die beiden Seiten der Drosselklappe in ein Druckgleichgewicht gebracht werden.

Bei sogenannten E-Gas-Anlagen, bei denen die Drosselklappe mittels eines elektrisch betreibbaren Stellmotors verschwenkt wird, lässt sich ein Blockieren der Drosselklappe nach dem Aushärten der Dichtmasse einfach vermeiden, wenn ein die Drosselklappe antreibender Stellmotor nach einem Aushärten der Dichtmasse bestromt und damit die Drosselklappe verschwenkt wird.

Weiterhin ist nur eine besonders geringe Menge an Dichtmittel erforderlich, da die Drosselklappe selbst und ein Teil des Gehäuses nicht mit Dichtmittel überzogen wird. Hierdurch gestaltet sich der erfindungsgemäße Drosselklappenstutzen besonders kostengünstig. Ein weiterer Vorteil der Erfindung besteht darin, dass ein Kalottenabschnitt nicht mit der Dichtmasse verschmutzt wird.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine Schnittdarstellung durch einen Drosselklappenstutzen im Bereich einer Drosselklappenwelle,
- Fig.2: eine Schnittdarstellung durch den Drosselklappenstutzen aus Figur 1 entlang der Linie II - II,
- Fig. 3: eine Schnittdarstellung durch eine weitere Ausführungsform des Drosselklappenstutzens im Bereich der Drosselklappe,
- Fig. 4: eine Schnittdarstellung durch den Drosselklappenstutzen aus Figur 3 entlang der Linie IV - IV.

Einander entsprechende Teile sind in allen Figuren mit den gleichen Bezugszeichen versehen.

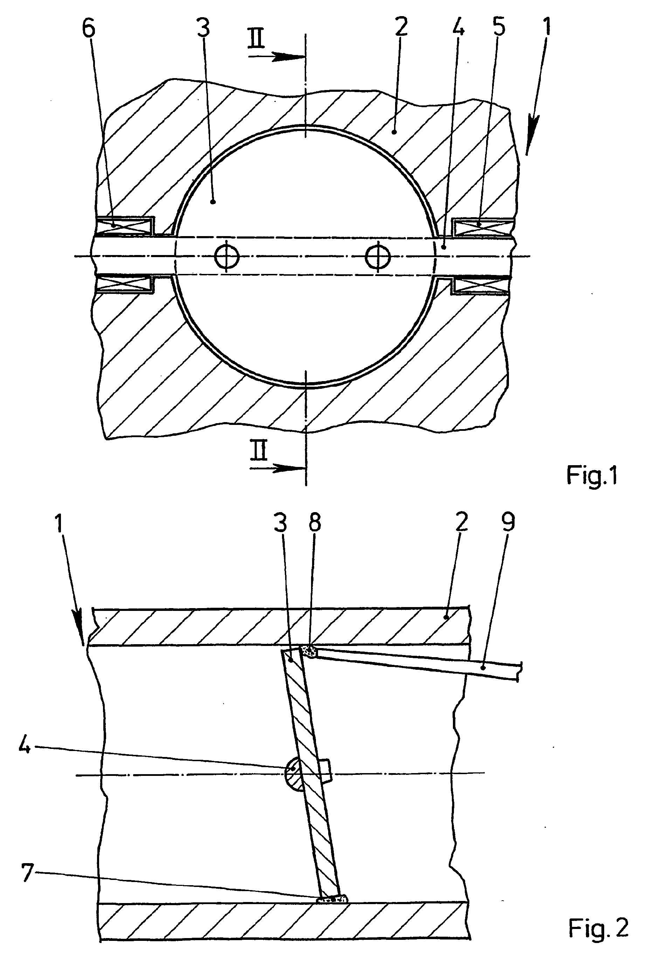

Figur 1 zeigt einen Drosselklappenstutzen 1 mit einem rohrförmigen Gehäuse 2 und einer darin schwenkbar gelagerten Drosselklappe 3. Die Drosselklappe 3 ist auf einer in dem rohrförmigen Gehäuse 2 gelagerten Drosselklappenwelle 4 befestigt. Das rohrförmige Gehäuse 2 weist Lagerungen 5, 6 für die Drosselklappenwelle 4 auf. Der dargestellte Drosselklappenstutzen 1 befindet sich in Schließstellung, in der die Drosselklappe 3 das rohrförmige Gehäuse 2 verschließt.

Figur 2 zeigt den Drosselklappenstutzen 1 aus Figur 1 in einer Schnittdarstellung entlang der Linie II - II. In der unteren Hälfte des Drosselklappenstutzens 1 ist dargestellt, dass die Drosselklappe 3 gegenüber der Wandung des rohrförmigen Gehäuses 2 mittels einer Dichtmasse 7 abgedichtet ist. Die Dichtmasse 7 ist ausgehärtet. Bei einem Verschwenken der Drosselklappe 3 verbleibt die Dichtmasse 7 an dem rohrförmigen Gehäuse 2. Die obere Hälfte zeigt den Drosselklappenstutzen 1 während des Auftragens von flüssiger Dichtmasse 8 in den aneinander grenzenden Bereich des rohrförmigen Gehäuses 2 und der Drosselklappe 3. Die Dichtmasse 8 wird mittels einer Kanüle 9 tropfenförmig aufgetragen und durch die Kapillarkräfte in den Spalt zwischen dem rohrförmigen Gehäuse 2 und der Drosselklappe 3 transportiert. Anschließend kann die Dichtmasse 8 aushärten.

Die Dichtmasse 7, 8 ist erfindungsgemäß ein Gleitlack, der nach Verflüchtigung eines Lösungsmittels aushärtet, und enthält Molybdänsulfid oder Polytetrafluorethylen. Der Gleitlack kann wahlweise bei Raumtemperatur aushärten oder eingebrannt werden.

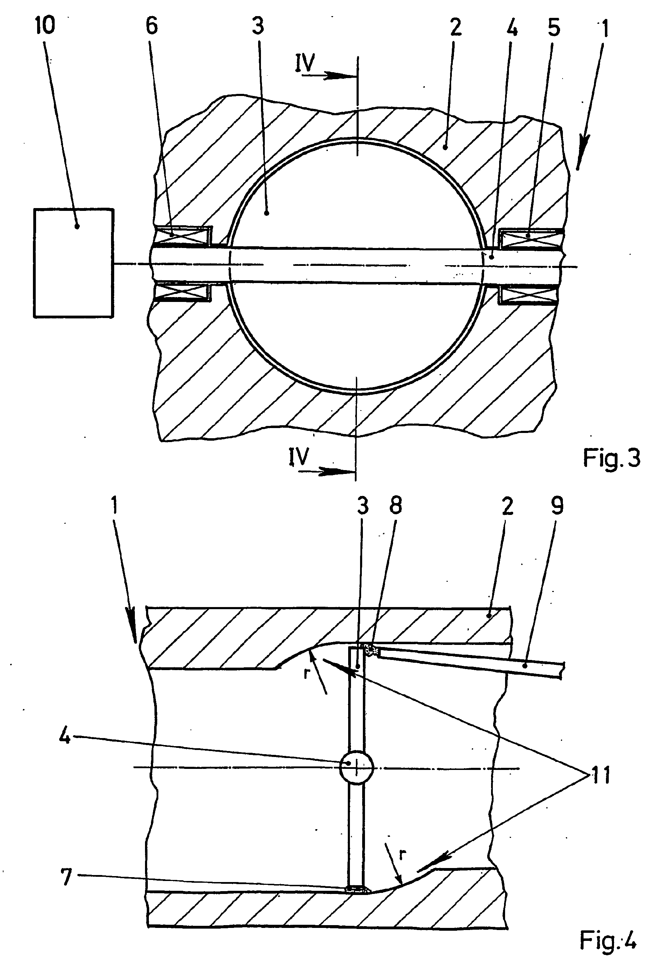

Figur 3 zeigt eine weitere Ausführungsform des Drosselklappenstutzens 1. Dieser unterscheidet sich von dem aus Figur 1 dadurch, dass die Drosselklappe 3 von einem elektrisch antreibbaren Stellmotor 10 verstellbar ist.

Wie Figur 4 in einer Schnittdarstellung durch den Drosselklappenstutzen 1 aus Figur 3 entlang der Linie IV-IV während des Aufbringens der Dichtmasse 7, 8 zeigt, hat das Gehäuse 3 nahe der Drosselklappe 3 zwei gegenüberstehende Kalottenabschnitte 11. Diese Kalottenabschnitte 11 ermöglichen eine besonders gute Dosierbarkeit des Luftdurchsatzes durch das Gehäuse 2 bei geringen Öffnungswinkeln der Drosselklappe 3. Das Einbringen der Dichtmasse 7, 8 erfolgt wie bei dem in den Figuren 1 und 2 beschriebenen Drosselklappenstutzen 1. Nach dem Aushärten der Dichtmasse 7, 8 kann hier jedoch der Stellmotor 10 bestromt und die Drosselklappe 3 verschwenkt werden.

## Patentansprüche

1. Verfahren zum Abdichten eines Spaltes zwischen einer schwenkbar in einem Drosselklappenstutzen (1) gelagerten Drosselklappe (3) und einem einen rohrförmigen oder einen Kalottenabschnitt aufweisenden Gehäuse (2) des Drosselklappenstutzens, bei dem die Drosselklappe in eine das Gehäuse verschließende Stellung gebracht und anschließend Dichtmasse (7, 8) in den Drosselklappenstutzen eingebracht wird, wobei die Dichtmasse tropfenförmig in aneinander stoßende Bereiche der Drosselklappe und des Gehäuses in einer für eine Verteilung durch die Kapillarkräfte ausreichenden Menge aufgebracht wird, **dadurch gekennzeichnet, dass** als Dichtmasse (7, 8) ein Molybdänsulfid oder Polytetrafluorethylen enthaltender Gleitlack aufgebracht wird.

2. Drosselklappenstutzen mit einer in einem rohrförmigen oder einen Kalottenabschnitt aufweisenden Gehäuse (2) schwenkbar gelagerten Drosselklappe (3) und mit einer die Drosselklappe gegenüber dem Gehäuse in Schließstellung abdichtenden Dichtmasse (7, 8) wobei die Dichtmasse ausschließlich in einem Spalt zwischen der Drosselklappe und dem Gehäuse angeordnet ist, **dadurch gekennzeichnet, dass** die Dichtmasse (7,8) ein Molybdänsulfid oder Polytetrafluorethylen enthaltender Gleitlack ist.

## Claims

1. Method for sealing off a gap between a throttle valve (3) pivotably mounted in a throttle valve assembly (1) and a tubular housing (2) or a housing (2) having a spherical segment of the throttle valve assembly, in which method the throttle valve is brought into a position closing the housing and subsequently sealing compound (7, 8) is introduced into the throttle valve assembly, the sealing compound being applied in drop form into regions of the throttle valve and of the housing which abut one another, in a quantity sufficient for distribution by means of the capillary forces, **characterized in that** as sealing compound (7, 8) a slip lacquer containing molybdenum sulfide or polytetrafluoroethylene is applied.

2. Throttle valve assembly with a throttle valve (3) pivotably mounted in a tubular housing (2) or housing (2) having a spherical segment and with a sealing compound (7, 8) sealing off the throttle valve with respect to the housing in the closing position, the sealing compound being disposed solely in a gap between the throttle valve and the housing, **characterized in that** the sealing compound (7, 8) is a slip lacquer containing molybdenum sulfide or polytetrafluoroethylene.

## Revendications

1. Procédé permettant de rendre étanche un interstice situé entre un papillon (3) de régulation des gaz monté pivotant dans une tubulure (1) à papillon de régulation des gaz et un corps (2) de la tubulure à papillon de régulation des gaz comportant une partie tubulaire ou en forme de calotte, au cours duquel le papillon de régulation des gaz est amené dans une position où le corps de la tubulure est obturé et, ensuite, un composant pour joints (7, 8) est appliqué dans la tubulure à papillon de régulation des gaz, le composant pour joints étant appliqué sous forme de gouttes dans des zones où le papillon de régulation des gaz et le corps de la tubulure se touchent, en quantité suffisante pour qu'il se répartisse en raison des forces capillaires, **caractérisé par le fait qu'**on applique, en tant que composant pour joints (7, 8), un sulfure de molybdène ou un vernis lisse renfermant du polytétrafluoréthylène.

2. Tubulure à papillon de régulation des gaz avec un papillon (3) de régulation des gaz monté pivotant dans un corps (2) comportant une partie tubulaire ou en forme de calotte et un composant pour joints (7, 8) assurant l'étanchéité, en position fermée, du clapet de régulation des gaz par rapport au corps, le composant pour joints étant disposé exclusivement dans un interstice entre le papillon de régulation des gaz et le corps, **caractérisé par le fait que** le composant pour joints (7, 8) est un sulfure de molybdène ou un vernis lisse renfermant du polytétrafluoréthylène.
